# FASCICULE DE BREVET EUROPEEN

(11) **EP 2 251 220 B1**
(45) Date de publication et mention de la délivrance du brevet: **19.09.2012**
(21) Numéro de dépôt: 10162345.2
(22) Date de dépôt: 07.05.2010
(51) Int. Cl.: B60H 1/00, B60H 3/06

(54) **Dispositif d'aspiration**
Ansaugvorrichtung
Aspiration device

(30) Priorité: 13.05.2009 DE 102009021047
(43) Date de publication de la demande: 17.11.2010
(73) Titulaire: Valeo Klimasysteme GmbH, 96476 Rodach (DE)
(72) Inventeur: Derx, Siegfried, 96215, LICHTENFELS (DE); Gwosdek, Albert, 96432, STOCKEIM (DE)
(74) Mandataire: Metz, Gaëlle

(56) Documents cités:
- EP-A1- 0 744 309
- DE-A1- 10 031 270
- DE-C1- 19 537 595
- US-B1- 6 722 152

## Description

L'invention concerne un dispositif d'aspiration pour une installation de chauffage ou de climatisation d'un véhicule.

Un tel dispositif d'aspiration est toujours raccordé à l'habitacle intérieur d'un véhicule, soit pour fournir à l'habitacle intérieur de l'air frais provenant de l'extérieur du véhicule et/soit pour faire circuler l'air dans l'habitacle intérieur. En outre, il est en général prévu des composants additionnels, qui peuvent réchauffer ou refroidir l'air frais ou l'air recyclé, selon les besoins.

Des dispositifs d'aspiration connus par l'état de la technique comprennent en règle générale un filtre, qui purifie au moins l'air frais, mais de préférence aussi l'air recyclé. Au cours du temps, ce filtre se charge d'impuretés, de sorte qu'il doit être remplacé. Pour éviter une contamination de l'habitacle intérieur du véhicule à l'occasion du remplacement du filtre, l'échange du filtre est habituellement effectué de l'extérieur de l'habitacle intérieur, par exemple à partir du compartiment moteur.

Le compartiment moteur du véhicule est habituellement délimité par une paroi de protection, qui est prévue principalement pour des raisons de sécurité et qui doit minimiser les dommages par exemple en cas de collision. Entre le compartiment moteur et l'habitacle intérieur du véhicule, une telle paroi de protection peut aussi faire office en outre de paroi de protection contre l'incendie, qui protège l'habitacle intérieur du véhicule par exemple en cas d'incendie du moteur. Dans les camions, il est en outre prévu une paroi de protection sur le côté avant du moteur.

Tant pour sa fonction de stabilisation que pour sa fonction de protection contre l'incendie, il est clair qu'un affaiblissement de la paroi de protection par des ouvertures doit rester aussi faible que possible. Il n'est cependant pas possible d'éviter complètement de telles ouvertures dans la paroi de protection, parce qu'elles sont nécessaires par exemple pour l'arrivée d'air frais et pour le remplacement du filtre.

Le document DE 100 31 270 A1 montre un dispositif d'aspiration pour des véhicules automobiles, dans lequel un filtre à air peut être inséré dans la chambre d'aspiration à travers une ouverture d'admission de l'entrée d'air frais ou peut être enlevé de celle-ci. La section transversale de l'ouverture de l'entrée d'air frais est par conséquent conçue pour un débit d'air entrant souhaité et en même temps pour une possibilité de changement du filtre, le remplacement et la fixation du filtre dans le boîtier apparaissant fort compliqués. Pour permettre le remplacement du filtre, l'entrée d'air frais doit en général être dimensionnée plus largement que nécessaire en fonctionnement pour l'arrivée d'air frais. Etant donné que cette entrée d'air frais surdimensionnée doit habituellement pouvoir être fermée, il faut un clapet de fermeture mobile de nouveau surdimensionné, lequel peut donner lieu, dans le dispositif d'aspiration, à des problèmes de stabilité qui entraînent des coûts de fabrication accrus.

Le but de l'invention est de procurer un dispositif d'aspiration qui présente une petite ouverture d'accès, qui peut être fabriqué à un prix économique et qui permet un remplacement simple du filtre.

Conformément à l'invention, ce but est atteint par un dispositif d'aspiration pour une installation de chauffage ou de climatisation de véhicule, comportant une chambre d'aspiration, qui est disposée en amont d'une soufflante de ventilateur, ainsi qu'un filtre, qui est disposé dans la chambre d'aspiration, dans lequel la chambre d'aspiration présente une ouverture d'accès, dont la section transversale se compose d'une partie d'aspiration et d'une partie de filtre voisine. En fonctionnement, la partie d'aspiration peut être ouverte ou fermée, au choix, pour une admission d'air frais dans la chambre d'aspiration. La partie de filtre est fermée par une paroi se trouvant dans sa position de fonctionnement, et, lors du changement de filtre, la partie d'aspiration est ouverte et la paroi est déplacée hors de sa position de fonctionnement, afin de libérer la partie de filtre, de telle manière que la partie d'aspiration et la partie de filtre soient ouvertes et forment ensemble l'ouverture d'accès. De cette manière, la section transversale de la partie d'aspiration peut par conséquent être déterminée exclusivement en accord avec les exigences de l'installation respective de chauffage ou de climatisation de véhicule, tandis que la section transversale de la partie de filtre est déterminée exclusivement par la forme du filtre. La partie d'aspiration ouverte lors du changement de filtre permet cependant, de façon avantageuse, une bonne accessibilité au filtre, qui peut par conséquent être changé rapidement en quelques manoeuvres.

De préférence, le filtre est monté de telle manière qu'il puisse, lors du changement de filtre, être remplacé sur la partie de filtre de l'ouverture d'accès au moyen d'un mouvement de translation dans une direction d'extraction ou dans une direction d'insertion opposée. En l'occurrence, la direction d'extraction ou d'insertion est de préférence perpendiculaire à la direction d'écoulement de l'air lors de sa traversée du filtre. Ce montage du filtre permet de remplacer le filtre très rapidement et simplement avec une section transversale minimale de la partie de filtre. Pour le déplacement de la paroi hors de sa position de fonctionnement et pour une meilleure préhension ou accessibilité du filtre, la section transversale restant encore disponible de la partie d'aspiration est à cet égard très utile.

Dans un mode de réalisation du dispositif d'aspiration, il est prévu une pièce de fermeture mobile pour libérer et fermer la partie d'aspiration. Avec cette pièce de fermeture, il est possible d'empêcher de façon simple une entrée d'air frais, dans certains cas indésirable, dans l'habitacle intérieur du véhicule.

En amont du filtre, la chambre d'aspiration peut présenter une ouverture pour l'air de recyclage, à travers laquelle de l'air provenant d'un habitacle intérieur de véhicule peut s'écouler dans la chambre d'aspiration. Ceci permet un fonctionnement en recyclage d'air, dans lequel une entrée d'air frais est indésirable et seul l'air présent dans l'habitacle intérieur du véhicule est mis en circulation et en l'occurrence éventuellement refroidi ou réchauffé.

De façon particulièrement préférée, la pièce de fermeture est mobile entre une première position de butée, dans laquelle elle ferme la partie d'aspiration, et une deuxième position de butée, dans laquelle elle ferme l'ouverture pour l'air de recyclage. Il est ainsi possible de régler avec une seule pièce de fermeture un fonctionnement en recyclage d'air, un fonctionnement avec apport d'air frais ou un fonctionnement mixte quelconque du dispositif d'aspiration.

Dans un autre mode de réalisation, il est prévu une pièce de fermeture mobile, qui ferme l'ouverture pour l'air de recyclage lors du changement de filtre. On garantit ainsi qu'il ne se produit aucune contamination de l'habitacle intérieur du véhicule par l'ouverture d'air de recyclage à l'occasion d'un changement de filtre.

Selon un autre mode de réalisation du dispositif d'aspiration pour une installation de chauffage ou de climatisation d'un véhicule, une paroi de protection limitant le compartiment moteur et/ou l'habitacle intérieur d'un véhicule est jointive à l'ouverture d'accès, la paroi de protection présentant une ouverture de paroi de protection, qui est en communication d'écoulement avec l'ouverture d'accès.

De préférence, l'ouverture d'accès et l'ouverture de la paroi de protection présentent en l'occurrence essentiellement la même surface de section transversale (± 15 %). Par suite de la configuration avantageuse de l'ouverture d'accès avec une partie d'aspiration et une partie de filtre voisine, il ne faut prévoir dans la paroi de protection qu'une seule ouverture de paroi de protection avec une section transversale minimale. Par conséquent, la stabilité et la fonction de protection contre l'incendie de la paroi de protection ne sont guère affectées.

En fonctionnement, la partie de filtre de l'ouverture d'accès est fermée par la paroi, qui est décalée d'au moins 50 % de l'épaisseur de filtre en direction de l'habitacle intérieur du véhicule par rapport à la paroi de protection. Ce décalage permet un courant d'arrivée avantageux dans la partie d'aspiration en utilisant la pleine section transversale de l'ouverture de paroi de protection. De cette manière, un débit d'air souhaité peut s'écouler dans la chambre d'aspiration pour une section transversale minimale de la partie d'aspiration.

D'autres caractéristiques et avantages de l'invention apparaîtront par la description qui suit d'un mode de réalisation préféré qui fait référence aux dessins annexés, dans lesquels
La Fig. 1 est une coupe verticale schématique à travers le dispositif d'aspiration selon l'invention, incorporé dans un véhicule, le long de la ligne I-I de la Figure 2;
La Fig. 2 est une coupe horizontale schématique à travers le dispositif d'aspiration, le long de la ligne II-I de la Figure 1; et
La Fig. 3 est une coupe verticale schématique à travers le dispositif d'aspiration selon l'invention, dans une position de fonctionnement et lors du changement de filtre.

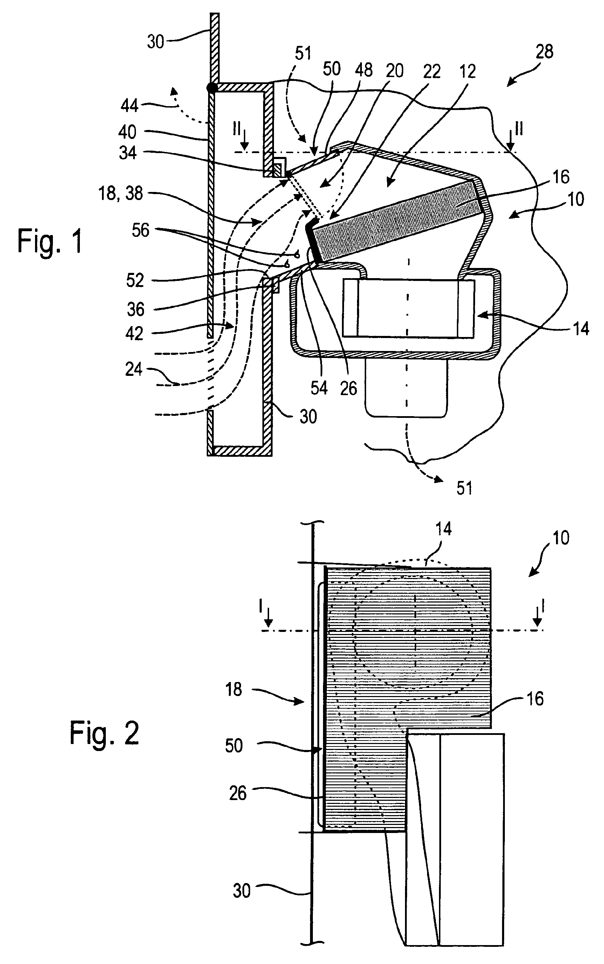

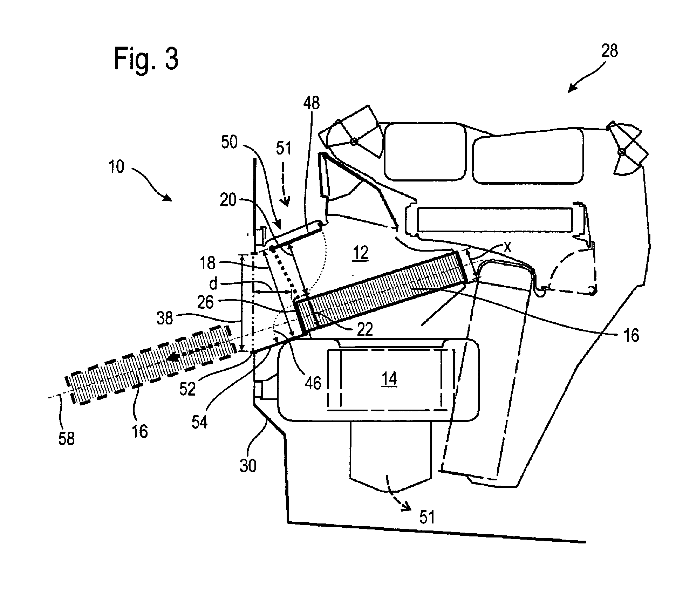

La Figure 1 montre un dispositif d'aspiration 10 pour une installation de chauffage ou de climatisation d'un véhicule en une coupe verticale schématique I-I, avec une chambre d'aspiration 12 qui est disposée en amont d'une soufflante de ventilateur 14, ainsi qu'un filtre 16 qui est disposé dans la chambre d'aspiration 12. La chambre d'aspiration 12 présente une ouverture d'accès 18, dont la section transversale se compose d'une partie d'aspiration 20 en amont du filtre 16 et d'une partie de filtre voisine 22, la partie d'aspiration 20 pouvant en fonctionnement être au choix ouverte ou fermée pour un courant d'admission d'air frais 24 dans la chambre d'aspiration 12. La partie de filtre 22 est fermée par une paroi 26 se trouvant dans sa position de fonctionnement. Lors du changement de filtre (voir aussi la Figure 3), la partie d'aspiration 20 est ouverte et la paroi 26 est déplacée hors de sa position de fonctionnement, afin de libérer la partie de filtre 22, de telle manière que la partie d'aspiration 20 et la partie de filtre 22 soient ouvertes et forment ensemble l'ouverture d'accès 18. Le montage et le démontage du filtre 16 sont facilités par la grande ouverture d'accès 18.

Le dispositif d'aspiration 10 est, selon la Figure 1, installé dans un véhicule 28 indiqué seulement de façon fragmentaire. Dans le cas présent, le véhicule 28 est un camion, dont la région avant est dessinée schématiquement dans la Figure 1. Le véhicule 28 présente en l'occurrence une paroi de protection 30, qui délimite vers l'avant un compartiment moteur du véhicule 28.

Bien que l'utilisation du dispositif d'aspiration représenté 10 dans des camions se soit avérée particulièrement avantageuse, l'idée de l'invention peut bien entendu être transférée sans plus aussi à des dispositifs d'aspiration 10 d'autres véhicules, en particulier de voitures automobiles.

Dans des voitures automobiles, la paroi de protection 30 se trouve de préférence entre le compartiment moteur et l'habitacle intérieur de la voiture automobile, le filtre 16 étant alors enlevé via le compartiment moteur lors d'un changement de filtre.

Le dispositif d'aspiration 10 est monté sur la paroi de protection 30 au moyen de joints d'étanchéité 34, 36, et la paroi de protection 30 présente une ouverture de paroi de protection 38, qui est en communication d'écoulement avec l'ouverture d'accès 18.

La paroi de protection 30 est prévue à une extrémité avant du véhicule 28 et elle est fermée vers l'extérieur au moyen d'un hotte 40 pouvant être ouverte, et un canal d'admission 42 est formé entre la hotte 40 et la paroi de protection 30. En particulier dans des camions, la hotte 40 prévue à l'avant est également appelée hotte d'entretien, qui peut pivoter (voir la flèche 44) et qui permet ainsi un accès au dispositif d'aspiration 10 ainsi que le cas échéant au compartiment moteur.

En cours de fonctionnement du dispositif d'aspiration 10, l'air frais 24 peut s'écouler dans la chambre d'aspiration 12 par des ouvertures dans la hotte 40 ainsi que par le canal d'admission 42 à travers l'ouverture de paroi de protection 38 et l'ouverture d'accès 18. L'ouverture d'accès 18 et l'ouverture de paroi de protection 38 présentent en l'occurrence essentiellement a même surface de section transversale. Cependant, en cours de fonctionnement du dispositif d'aspiration 10, au maximum la partie d'aspiration 20 de l'ouverture d'accès 18 est ouverte pour une admission d'air frais 24. La partie de filtre 22 est fermée par la paroi 26 se trouvant en position de fonctionnement. Cette paroi 26 peut, comme cela est représenté dans les Figures 1 et 3, être un couvercle de filtre séparé, imperméable à l'air, qui est fixé en particulier à la paroi de la chambre, ou encore une paroi latérale de filtre imperméable à l'air du filtre 16 lui-même. Selon le mode de réalisation des Figures 1 et 3, la paroi 26 se présentant sous la forme d'un couvercle de filtre est apte à pivoter entre la position de fonctionnement et une position de changement de filtre (voir la flèche 46 dans la Figure 3).

En cours de fonctionnement du dispositif d'aspiration 10, la paroi 26 fixe le filtre 16 dans sa position de fonctionnement selon la Figure 1. En même temps, la paroi 26 dans sa position de fonctionnement sert aussi de butée pour une pièce de fermeture mobile 48, qui est prévue pour libérer et fermer la partie d'aspiration 20.

La chambre d'aspiration 12 présente, en amont du filtre 16, une ouverture de recyclage d'air 50, par laquelle l'air provenant d'un habitacle intérieur 51 peut s'écouler dans la chambre d'aspiration 12. La pièce de fermeture 48 est mobile entre une position de butée, dans laquelle elle ferme la partie d'aspiration 20 (représentée en traits interrompus), et une position de butée, dans laquelle elle ferme l'ouverture de recyclage d'air (représentée en traits pleins).

Lors du changement de filtre, la pièce de fermeture 48 se trouve dans la position de butée (par exemple du fait qu'elle est précontrainte dans cette direction), dans laquelle elle ferme l'ouverture de recyclage d'air 50. En raison de la libération correspondante de la partie d'aspiration 20, la paroi 26 ainsi que le filtre 16 sont bien accessibles, de telle manière que la paroi 26 puisse pivoter simplement et que le filtre 16 puisse être remplacé sans grande complication. En même temps, la fermeture de l'ouverture de recyclage d'air 50 offre l'avantage que l'habitacle intérieur 51 du véhicule ne peut pas être contaminé par les impuretés se trouvant dans le filtre 16, lors du changement de filtre.

Bien que l'on n'ait représenté qu'une seule pièce de fermeture 48 dans le mode de réalisation représenté dans les Figures 1 à 3, il peut naturellement aussi être prévu, dans des modes de réalisation alternatifs, des pièces de fermeture séparées pour ouvrir et fermer la partie d'aspiration 20 ou l'ouverture de recyclage d'air 50.

Après que de l'air frais 24 ou de l'air de recyclage ait pénétré dans la chambre d'aspiration 12 par la partie d'aspiration 20 ou l'ouverture de recyclage d'air 50, l'air est aspiré par la soufflante de ventilateur 14 à travers le filtre 16 et ensuite soufflé en direction de l'habitacle intérieur du véhicule 51. Pour pouvoir filtrer le débit d'air souhaitable, il faut en règle générale une section transversale de filtre, qui est nettement plus grande qu'une section transversale d'aspiration de la soufflante de ventilateur 14. Pour minimiser l'espace nécessaire pour installer le dispositif d'aspiration 10, il est dès lors particulièrement avantageux que la chambre d'aspiration 12 se rétrécisse en forme d'entonnoir entre le filtre 16 et la soufflante de ventilateur 14, comme cela est représenté dans la Figure 1.

La Figure 2 montre une coupe horizontale schématique II-II du dispositif d'aspiration 10. En l'occurrence, il est clair que le filtre 16 se présente sous la forme d'un filtre à plaques. Cela signifie que le filtre 16 s'étend essentiellement dans un plan et qu'il peut par conséquent être fabriqué de façon simple et économique.

D'une manière particulièrement préférée, le filtre 16 présente un contour essentiellement parallélépipédique, ce qui procure d'autres avantages en termes de fabrication et de coût. Pour des raisons de conditions aux limites de montage prédéterminées, un tel contour parallélépipédique ne peut cependant pas toujours être réalisé, comme on peut le voir dans la Figure 2.

Tout comme la Figure 1, la Figure 3 montre une coupe verticale à travers le dispositif d'aspiration 10, dans laquelle le filtre 16 est représenté aussi bien en position de fonctionnement (en traits pleins) que dans une position de changement de filtre (en traits interrompus).

Dans la Figure 3, on a encore indiqué par des doubles flèches que l'ouverture d'accès 18 et l'ouverture de paroi de protection voisine 38 présentent essentiellement la même surface de section transversale. La paroi 26, qui ferme en fonctionnement la partie de filtre 22 de l'ouverture d'accès 18, est décalée d'une distance d en direction de l'habitacle intérieur du véhicule 51 par rapport à la paroi de protection 30. Cette distance d vaut en l'occurrence de préférence au moins 50 % d'une épaisseur de filtre x.

Du reste, un fond 54 incliné vers la paroi de protection 30 s'étend entre la paroi 26 et une arête inférieure 52 de l'ouverture de paroi de protection 38. Le décalage de la paroi 26 ou du filtre 16 en direction de l'habitacle intérieur du véhicule permet une admission d'air frais 24 sur toute la section transversale de l'ouverture de paroi de protection 38 (voir la Figure 1). Il en résulte des conditions d'écoulement particulièrement homogènes à la partie d'aspiration 20, de telle manière qu'un débit d'air souhaité puisse s'écouler dans la chambre d'aspiration 12 pour une section transversale minimale de la partie d'aspiration 20.

Par ailleurs, il est apparu que l'air frais 24 dépose aussi sur la paroi 26 de l'humidité 56, qui peut s'écouler par le fond incliné 54 dans le canal d'admission 42 et de là dans l'environnement. Par conséquent, le filtre 16 est avantageusement soumis à une moindre quantité d'humidité.

De manière analogue au fond 54, le filtre 16 est également disposé de préférence en position inclinée, de telle manière que l'humidité éventuellement présente dans l'air frais puisse se déposer sur une surface du filtre 16 et également s'écouler vers le canal d'admission 42 par le fond 54. A cet effet, il faut éventuellement prévoir des ouvertures d'évacuation dans la paroi 26.

Pour pouvoir évacuer de façon fiable l'humidité déposée sur la surface de filtre ou sur la paroi 26, le fond 54 ainsi que le filtre 16 sont inclinés d'au moins 20° en direction de la paroi de protection 30.

Du reste, le filtre 16 est installé de telle manière qu'il puisse être remplacé lors du changement de filtre sur la partie de filtre 22 de l'ouverture d'accès 18 au moyen d'un mouvement de translation dans une direction d'extraction ou dans une direction d'insertion opposée 58. En l'occurrence, la direction d'extraction ou d'insertion 58 est essentiellement perpendiculaire à une direction d'écoulement de l'air lors de sa traversée du filtre 16 le long de son épaisseur x.

Le dispositif d'aspiration 10 ainsi décrit permet un remplacement rapide et simple du filtre 16, qui est fixé dans sa position de fonctionnement uniquement par la paroi pivotante 26. En même temps, le dispositif d'aspiration 10 permet un filtrage de l'air frais et de l'air de recyclage, la partie d'aspiration 20 pour l'air frais et l'ouverture d'air de recyclage 50 pouvant être dimensionnées spécialement à la section transversale d'écoulement respectivement nécessaire, laquelle peut de nouveau être fermée par une petite pièce de fermeture correspondante 48, si cela est nécessaire. Par ailleurs, le remplacement avantageux du filtre et l'admission avantageuse d'air frais sont réalisés par une seule ouverture d'accès 18 relativement petite. Par conséquent, seule une petite ouverture de paroi de protection 38 est nécessaire, de telle manière que la paroi de protection 30 ne soit affaiblie que dans une faible mesure.

## Revendications

1. Dispositif d'aspiration pour une installation de chauffage ou de climatisation de véhicule, comportant
une chambre d'aspiration (12), qui est disposée en amont d'une soufflante de ventilateur (14), ainsi que
un filtre (16), qui est disposé dans la chambre d'aspiration (12),
dans lequel la chambre d'aspiration (12) présente une ouverture d'accès (18), dont la section transversale se compose d'une partie d'aspiration (20) et d'une partie de filtre voisine (22),
dans lequel, en fonctionnement, la partie d'aspiration (20) peut être ouverte ou fermée, au choix, pour une admission d'air frais (24) dans la chambre d'aspiration (12), **caractérisé en ce que** la partie de filtre (22) est fermée par une paroi (26) se trouvant dans sa position de fonctionnement, et
dans lequel, lors du changement de filtre, la partie d'aspiration (20) est ouverte et la paroi (26) est déplacée hors de sa position de fonctionnement, afin de libérer la partie de filtre (22), de telle manière que la partie d'aspiration (20) et la partie de filtre (22) soient ouvertes et forment ensemble l'ouverture d'accès (18).

2. Dispositif d'aspiration selon la revendication 1, **caractérisé en ce que** le filtre (16) est monté de telle manière qu'il puisse, lors du changement de filtre, être remplacé sur la partie de filtre (22) de l'ouverture d'accès (18) au moyen d'un mouvement de translation dans une direction d'extraction ou dans une direction d'insertion opposée (58).

3. Dispositif d'aspiration selon la revendication 1 ou 2, **caractérisé en ce que** la paroi (26) fermant en fonctionnement la partie de filtre (22) est un couvercle de filtre imperméable à l'air ou une paroi latérale de filtre imperméable à l'air.

4. Dispositif d'aspiration selon l'une quelconque des revendications précédentes, **caractérisé en ce que** la paroi (26) est apte à pivoter entre la position de fonctionnement et une position de changement de filtre.

5. Dispositif d'aspiration selon l'une quelconque des revendications précédentes, **caractérisé en ce qu'**il est prévu une pièce de fermeture mobile (48) pour libérer et fermer la partie d'aspiration (20).

6. Dispositif d'aspiration selon l'une quelconque des revendications précédentes, **caractérisé en ce que** la chambre d'aspiration (12) présente en amont du filtre (16) une ouverture pour l'air de recyclage (50), à travers laquelle de l'air provenant d'un habitacle intérieur de véhicule peut s'écouler dans la chambre d'aspiration (12).

7. Dispositif d'aspiration selon la revendication 5 et 6, **caractérisé en ce que** la pièce de fermeture (48) est mobile entre une première position de butée, dans laquelle elle ferme la partie d'aspiration (20), et une deuxième position de butée, dans laquelle elle ferme l'ouverture pour l'air de recyclage (50).

8. Dispositif d'aspiration selon la revendication 6 ou 7, **caractérisé en ce qu'**il est prévu une pièce de fermeture mobile (48), qui ferme l'ouverture pour l'air de recyclage (50) lors du changement de filtre.

9. Dispositif d'aspiration selon l'une quelconque des revendications précédentes, **caractérisé en ce que** le filtre (16) se présente sous la forme d'un filtre à plaques.

10. Dispositif d'aspiration selon l'une quelconque des revendications précédentes, **caractérisé en ce que** le filtre (16) présente un contour extérieur sensiblement parallélépipédique.

11. Dispositif d'aspiration selon l'une quelconque des revendications précédentes, **caractérisé en ce que** la chambre d'aspiration (12) se rétrécit en forme d'entonnoir entre le filtre (16) et la soufflante de ventilateur (14).

12. Dispositif d'aspiration selon l'une quelconque des revendications précédentes, **caractérisé en ce qu'**une paroi de protection (30) limitant le compartiment moteur et/ou l'habitacle intérieur d'un véhicule (28) est jointive à l'ouverture d'accès (18), dans lequel la paroi de protection (30) présente une ouverture de paroi de protection (38), qui est en communication d'écoulement avec l'ouverture d'accès (18).

13. Dispositif d'aspiration selon la revendication 12, **caractérisé en ce que** la paroi de protection (30) est prévue à une extrémité avant du véhicule (28) et est fermée vers l'extérieur par une hotte pouvant être ouverte (40), dans lequel un canal d'admission (42) est formé entre la hotte (40) et la paroi de protection (30).

14. Dispositif d'aspiration selon la revendication 12 ou 13, **caractérisé en ce que** l'ouverture d'accès (18) et l'ouverture de la paroi de protection (38) présentent essentiellement la même surface de section transversale.

15. Dispositif d'aspiration selon l'une quelconque des revendications 12 à 14, **caractérisé en ce que** la partie de filtre (22) de l'ouverture d'accès (18) est fermée en fonctionnement par la paroi (26), qui est décalée d'au moins 50 % de l'épaisseur de filtre (x) en direction de l'habitacle intérieur du véhicule (28) par rapport à la paroi de protection (30).

16. Dispositif d'aspiration selon l'une quelconque des revendications 12 à 15, **caractérisé en ce qu'**un fond (54) incliné vers la paroi de protection (30) s'étend entre la paroi (26) et une arête inférieure (52) de l'ouverture de la paroi de protection (38).

## Claims

1. Aspiration device for a vehicle heatinq or air conditioning installation, comprising
a suction chamber (12), which is positioned upstream of a fan blower (14) and
a filter (16) which is positioned in the suction chamber (12),
in which the suction chamber (12) has an access opening (18) the cross section of which is made up of a suction part (20) and of an adjacent filter part (22),
in which, in operation, the suction part (20) can be opened or closed, as desired, to admit fresh air (24) into the suction chamber (12), **characterized in that** the filter part (22) is closed by a wall (26) which is in its operating position, and
in which, when the filter is being changed, the suction part (20) is opened and the wall (26) is moved out of its operating position in order to free the filter part (22) so that the suction part (20) and the filter part (22) are opened and together form the access opening (18).

2. Aspiration device according to Claim 1, **characterized in that** the filter (16) is mounted in such a way that it can, when the filter is being changed, be puL back on the filter part (22) of the access opening (18) through a translational movement in an extraction direction or in an opposite insertion direction (58).

3. Aspiration device according to Claim 1 or 2, **characterized in that** the wall (26) which in operation closes the filter part (22), is a filter cover that is impermeable to air or a filter sidewall that is impermeable to air.

4. Aspiration device according to any one of the preceding claims, **characterized in that** the wall (26) is able to pivot between the operating position and a filter-change position.

5. Aspiration device according to any one of the preceding claims, **characterized in that** a mobile closure piece (48) is provided to free and to close the suction part (20).

6. Aspiration device according to any one of the preceding claims, **characterized in that** the suction chamber (12) has, upstream of the filter (16), an opening for recirculated air (50), through which air from an interior cabin of the vehicle can flow into the suction chamber (12).

7. Aspiration device according to Claims 5 and 6, **characterized in that** the closure piece (48) is able to move between a first position of abutment, in which it closes the suction part (20), and a second position of abutment in which is closes the opening for the recirculated air (50).

8. Aspiration device according to Claim 6 or 7, **characterized in that** a moving closure piece (48) is provided and closes the opening for the recirculated air (50) when the filter is being changed.

9. Aspiration device according to any one of the preceding claims, **characterized in that** the filter (16) comes in the form of a plate filter.

10. Aspiration device according to any one of the preceding claims, **characterized in that** the filter (16) is of substantially parallelepipedal outline.

11. Aspiration device according to any one of the preceding claims, **characterized in that** the suction chamber (12) narrows into the form of a funnel between the filter (16) and the fan blower (14).

12. Aspiration device according to any one of the preceding claims, **characterized in that** a protective wall (30) bounding the engine compartment and/or the interior cabin of a vehicle (28) is contiguous with the access opening (18), in which the protective wall (30) has a protective-wall opening (38) which is in flow communication with Lhe access opening (18).

13. Aspiration device according to Claim 12, **characterized in that** the protective wall (30) is provided at a front end of the vehicle (28) and is closed towards the outside by a hood that can be opened (40), in which an inlet duct (42) is formed between the hood (40) and the protective wall (30).

14. Aspiration device according to Claim 12 or 13, **characterized in that** the access opening (18) and the protective-wall opening (38) have essentially the same cross-sectional area.

15. Aspiration device according to any one of Claims 12 to 14, **characterized in that** the filter part (22) of the access opening (18) is closed during operation by the wall (26), which is shifted by at least 50% of the thickness of filter (x) towards the interior cabin of the vehicle (28) with respect to the protective wall (30).

16. Aspiration device according to any one of Claims 12 to 15, **characterized in that** an end wall (54) inclined towards the protective wall (30) extends between the wall (26) and a lower edge (52) of the protective-wall opening (38).

## Patentansprüche

1. Ansaugvorrichtung einer Fahrzeugheizungs- oder Fahrzeugklimaanlage, mit
einer Ansaugkammer (12), die stromaufwärts eines Lüftergebläses (14) angeordnet ist, sowie
einem Filter (16), der in der Ansaugkammer (12) angeordnet ist,
wobei die Ansaugkammer (12) eine Zugangsöffnung (18) aufweist, deren Querschnitt sich zusammensetzt aus einem Ansaugabschnitt (20) und einem benachbarten Filterabschnitt (22),
wobei im Betrieb der Ansaugabschnitt (20) für einen Zustrom von Frischluft (24) in die Ansaugkammer (12) wahlweise geschlossen oder geöffnet werden kann, **dadurch gekennzeichnet, dass** der Filterabschnitt (22) durch eine sich in ihrer Betriebsstellung befindliche Wand (26) geschlossen ist, und
wobei beim Filterwechsel der Ansaugabschnitt (20) geöffnet und die Wand (26) aus ihrer Betriebsstellung heraus bewegt ist, um den Filterabschnitt (22) freizugeben, so dass der Ansaugabschnitt (20) und der Filterabschnitt (22) geöffnet sind und gemeinsam die Zugangsöffnung (18) bilden.

2. Ansaugvorrichtung nach Anspruch 1, **dadurch gekennzeichnet, dass** der Filter (16) so gelagert ist, dass er beim Filterwechsel über den Filterabschnitt (22) der Zugangsöffnung (18) mittels einer translatorischen Bewegung in einer Auszug- bzw. einer entgegengesetzten Einschubrichtung (58) austauschbar ist.

3. Ansaugvorrichtung nach Anspruch 1 oder 2, **dadurch gekennzeichnet, dass** die den Filterabschnitt (22) im Betrieb verschließende Wand (26) eine luftundurchlässige Filterabdeckung oder eine luftundurchlässige Filterseitenwand ist.

4. Ansaugvorrichtung nach einem der vorhergehenden Ansprüche, **dadurch gekennzeichnet, dass** die Wand (26) zwischen der Betriebsstellung und einer Filterwechselstellung schwenkbar ist.

5. Ansaugvorrichtung nach einem der vorhergehenden Ansprüche, **dadurch gekennzeichnet, dass** ein bewegliches Verschlussteil (48) zum Freigeben und Verschließen des Ansaugabschnitts (20) vorgesehen ist.

6. Ansaugvorrichtung nach einem der vorhergehenden Ansprüche, **dadurch gekennzeichnet, dass** die Ansaugkammer (12) stromaufwärts des Filters (16) eine Umluftöffnung (50) aufweist, durch die Luft aus einem Fahrzeuginnenraum in die Ansaugkammer (12) strömen kann.

7. Ansaugvorrichtung nach Anspruch 5 und 6, **dadurch gekennzeichnet, dass** das Verschlussteil (48) bewegbar ist zwischen einer ersten Anschlagstellung, in der es den Ansaugabschnitt (20) verschließt, und einer zweiten Anschlagstellung, in der es die Umluftöffnung (50) verschließt.

8. Ansaugvorrichtung nach Anspruch 6 oder 7, **dadurch gekennzeichnet, dass** ein bewegliches Verschlussteil (48) vorgesehen ist, welches beim Filterwechsel die Umluftöffnung (50) verschließt.

9. Ansaugvorrichtung nach einem der vorhergehenden Ansprüche, **dadurch gekennzeichnet, dass** der Filter (16) als Plattenfilter ausgebildet ist.

10. Ansaugvorrichtung nach einem der vorhergehenden Ansprüche, **dadurch gekennzeichnet, dass** der Filter (16) eine im wesentlichen quaderförmige Außenkontur aufweist.

11. Ansaugvorrichtung nach einem der vorhergehenden Ansprüche, **dadurch gekennzeichnet, dass** sich die Ansaugkammer (12) zwischen dem Filter (16) und dem Lüftergebläse (14) trichterartig verjüngt,

12. Ansaugvorrichtung nach einem der vorhergehenden Ansprüche, **dadurch gekennzeichnet, dass** an die Zugangsöffnung (18) eine den Motorraum und/oder Innenraum eines Fahrzeugs (28) begrenzende Schutzwand (30) angrenzt, wobei die Schutzwand (30) eine Schutzwandöffnung (38) aufweist, die mit der Zugangsöffnung (18) in Strömungsverbindung steht.

13. Ansaugvorrichtung nach Anspruch 12, **dadurch gekennzeichnet, dass** die Schutzwand (30) an einem Vorderende des Fahrzeugs (28) vorgesehen ist und nach außen hin von einer öffnungsfähigen Haube (40) abgeschlossen ist, wobei zwischen Haube (40) und Schutzwand (30) ein Zuströmkanal (42) gebildet ist.

14. Ansaugvorrichtung nach Anspruch 12 oder 13, **dadurch gekennzeichnet, dass** die Zugangsöffnung (18) und die Schutzwandöffnung (38) im wesentlichen dieselbe Querschnittsfläche aufweisen.

15. Ansaugvorrichtung nach einem der Ansprüche 12 bis 14, **dadurch gekennzeichnet, dass** der Filterabschnitt (22) der Zugangsöffnung (18) im Betrieb durch die Wand (26) verschlossen ist, welche relativ zur Schutzwand (30) um wenigstens 50% der Filterdicke (x) in Richtung zum Innenraum des Fahrzeugs (28) versetzt ist.

16. Ansaugvorrichtung nach einem der Ansprüche 12 bis 15, **dadurch gekennzeichnet, dass** zwischen der Wand (26) und einer Unterkante (52) der Schutzwandöffnung (38) ein zur Schutzwand (30) geneigter Boden (54) verläuft.
